# EUROPEAN PATENT APPLICATION

(11) **EP 4 223 140 A1**
(43) Date of publication of application: **09.08.2023**
(21) Application number: 22155292.0
(22) Date of filing: 04.02.2022
(51) Int. Cl.: A23K 20/24, A23K 40/10, A23K 50/10

(54) **ECO-FRIENDLY CALCIUM CARBONATE COMPOSITION AS A FOOD AND FEED ADDITIVE AND EXCIPIENT FOR PHARMACEUTICAL APPLICATION**

(71) Applicant: Ca Minerals B.V., 5445 AS Landhorst (NL)
(72) Inventor: de Bruin, Eric Christian, 5445 AS Landhorst (NL)
(74) Representative: Patent Business B.V.

(57) **Abstract**

The invention provides a method for producing a mineral feed additive comprising > 60 wt.% calcium carbonate, in particular comprising calcite, in particular an animal mineral feed additive, more in particular for calves, comprising:
- providing pellets resulting from drinking water softening, the pellets having a grafting core having at least 35 wt.% calcium, in particular at least 90 wt.% calcium carbonate, the pellets having a pellet size of 0.1 - 5 mm measured using sieve analysis, and an iron content below 100 ppm, in particular below 50 ppm, more in particular 5 ppm;
- drying the pellets to a moisture content of below 10 wt.%, in particular below 2 wt.%;
- grinding the pellets in a grinding mill using a grinding disc therewith obtaining grinded pellets, and
- separating from the grinded pellets through a classifying wheel using an air flow, resulting in a particle size distribution with d99 of less than 100 micron measured using a sieve measurement and d99 of less than 100 measured using laser diffraction, a calcium content of between 35% - 40% by weight, and an iron content of less than 50 ppm, in particular less than 10 ppm.

## Description

### Field of the invention

The invention relates to a method for producing calcium-rich food and/or feed additive, in particular for animal feed, more specifically for calf feed additive, and to an excipient.

### Background of the invention

Many food and/or feed additives are known in the art. In particular, calciumbased additives are used in many applications where milk-like compositions/replacers are produced.

Purity and processability, amongst others, of these products has been a challenge.

### Summary of the invention

A disadvantage of prior art that relatively expensive material is used that results from mining. Furthermore, compositions often include impurities.

Hence, it is an aspect of the invention to provide an alternative feed additive, which preferably further at least partly obviates one or more of above-described drawbacks.

There is provided a method for producing a mineral feed additive comprising > 60 wt.% calcium carbonate, in particular comprising calcite, in particular an animal mineral feed additive, more in particular for calves, comprising:
- providing pellets resulting from drinking water softening, the pellets having a grafting core having at least 35 wt.% calcium, in particular at least 90 wt.% calcium carbonate, the pellets having a pellet size of 0.1 - 5 mm measured using sieve analysis, and an iron content below 100 ppm, in particular below 50 ppm, more in particular 5 ppm;
- drying the pellets to a moisture content of below 10 wt.%, in particular below 2 wt.%;
- grinding the pellets in a grinding mill using a grinding disc therewith obtaining grinded pellets, and
- separating from the grinded pellets through a classifying wheel using an air flow, resulting in a particle size distribution with d99 of less than 100 micron measured using a sieve measurement and d99 of less than 100 measured using laser diffraction, a calcium content of between 35% - 40% by weight, and an iron content of less than 50 ppm, in particular less than 10 ppm.

There is furthermore provided a calcium carbonate mineral feed additive, in particular produced using the method of any one of the preceding method claims, wherein said calcium carbonate mineral feed product is a powder comprising:
- more than 95 wt.% calcium carbonate, in particular more than 97 wt.% calcium carbonate, more in particular more than 99 wt.% calcium carbonate;
- a particle size distribution with a D99 below 100 micron, in particular D90 below 60 micron when measured using laser diffraction;
- an iron content of less than 50 ppm in particular less than10 ppm;
- a heavy metal content of As < 1 ppm, Cd < 0.1 ppm, Hg < 0.1 ppm and Pb < 2 ppm, and
- an Al content of < 50 ppm.

The proposed method and additive largely comprised relatively cheap and easy to obtain side product of production of drinking water, which is on the other hand suited for its purpose, as it is derived from drinking water. The pellets do not need to be transported over large distances before manufacturing the feed additive.

Calcium carbonate is a cheap and non-toxic excipient largely used in soliddosage forms as a diluent buffering and bulking agent opacifier in tablet film and dissolution adjuvant in dispersible tablets (Rowe et al., 2009).

CaCO₃ is a naturally non-toxic biomineral and is chosen because it is a safe, cheap and eco-friendly excipient able to dissolve in an acidic environment.

The current purity of this calcium carbonate product makes is suitable for excipient application in pharma.

It was furthermore found that a powder having the defined properties can be dispersed into water, for instance providing a milk replacement.

In the claims, the amount of the component are based upon 100 grams of final material (about 1 %). These materials together usually add up to 100 grams. It should be clear, however, that the mutual ratios can vary, causing the upper and lower boundaries not to add up to 100 grams. In the claim, boundaries of the different components are indicated in a pre-mixture of 100 grams.

The product resulting from the method can also be used ad carrier material for additives in food and feed. For instance, minerals, vitamins, aminoacids and other compounds can be mixed with the additive of product resulting from the method. The purity and specific particle sizes and/or distribution allows easy processing and acceptance.

The pellets that result from drinking water softening are largely composed of calcium carbonate, CaCO₃. These pellets are also named "chalkbeads" "marble grains", precipitated calcium carbonate, or calcite (in Dutch: Kalkkorrels, marmerkorrels, geprecipiteerd calciumcarbonaat, calciet, marmerachtige kalksteen), and have EC-nr: 207-439-9, CAS-nr: 471-34-1, REACH-nr: 01-2119486795-18-xxx.

The heart of a pellet water softening installation is a reactor. The reactor or pellet reactor is a reactor filled with a grafting core or grafting grains, often fine sand, and in some case fine grains of calcite or other calcium-rich grafting cores. At the bottom of the reactor, water and chemicals (caustic soda, chalk milk (calciumhydroxide) or sodium carbonate) are injected and thoroughly mixed.

The chemicals increase the water pH causing calcium carbonate to precipitate from the solution and to crystallize on the grafting grains as pellets.

The pellets are fluidized by an upward flow of the water and gradually grow. This increases the weight of the pellets and reducing their surface area and reducing the net area of the fluidized bed. Furthermore, larger pellets fluidize less well than small pellets In most applications, the pellets grow up to about 1 mm. diameter. By removing too large pellets and supplying fresh grafting grains, the composition of the pellet bed is controlled.

In the Netherlands, for example, about 50 percent of the drinking water is softened using pellet reactors. The grafting grains may be replaced by calcium-rich grains, resulting in (almost) pure calcium grains or calcite pellets. Composition of available pellets:
CaCO₃ : 85 - 100%
sand : <0,1 - 15%
Fe salt: <0,1 - 0,75%
Al salt : <0,1 - 0,3%
Mg salt : <0,1 - 0,2%
Mn salt: <0,1 - 0,3%
Moisture (H₂O) : <1 - 5%

In an embodiment, the pellets can have a diameter of about 0.1 to 10 mm. In many applications, like the feed additive, the pellets have a diameter of 0,5-4 mm.

In an embodiment, the chalk is derived from grinded pellets resulting from drinking water softening and having calcite particles as grafting particles. In this way, a pure material can be used that is human food and animal feed safe.

In an embodiment, the grinding mill rotational velocity on production scale is 1500-2000 rpm.

In a further embodiment, the classified wheel rotational velocity is 200-800 rpm, preferably 400-600 rpm.

It was found that proper settings lead to a product that is easy to use and disperse. Coarse particles are unwanted. Too fine material was also not preferable.

In an embodiment, there is provided pellets resulting from drinking water softening and comprising a calcium carbonate grafting core. In an embodiment, the grafting core has a calcium carbonate content of more than 90 wt.%, in particular more than 95 wt.%, more in particular more than 97 wt.%. When carefully preparing the grafting core, a calcium carbonate content of more than 99 wt.% is possible. Good result were obtained when using grinded pellets as grafting core.

In an embodiment, the feed additive comprises more than 90% by weight calcium carbonate, in particular more than 97% by weight.

In an embodiment, the pellets comprise more than 95 wt.% calcium carbonate, in particular more than 97 wt.%, more in particular more than 99 wt.%.

In an embodiment, the method further comprises sieving the pellets before grinding to a sieve diameter smaller than 3 mm. In the experimental part below, a particle size distribution is presented.

In an embodiment, a disc grinder is used. In a particular embodiment, for keeping the iron contents below 50 ppm end even below 10 ppm, a disc grinder is provided having high wear components, in particular ceramic and or hardox steel wear protection.

There is furthermore provided a mineral feed additive produced using the method of any one of the preceding method claims, comprising as ingredients per 100 gram more than 97% by weight calcium carbonate, an iron content below 10 ppm, and a particle size distribution D99 below 100 micron. In a particular embodiment, it has D90 below 60 micron.

There is further provided an animal feed composition, in particular for calves, comprising the mineral feed additive presented in the form of a powder dispersed in water as milk replacement.

In an embodiment, there is further presented the use of the mineral feed additive produced using the current method in animal feed, in particular in calve feed, in particular in a dosage of 1-10 gr/kg animal in the feed.

There is further provided a use of pellets resulting from decalcification of drinking water in in a feed additive, in which said pellets have a core of calcium-rich grafting particles, in an embodiment calcite grafting particles. An advantage of such particular pallets is that it can be used completely and results in high quality end products. Furthermore, the composition may be even better guaranteed and checked. In a particular embodiment, the grafting core is made from recycled pellets which are broken into smaller cores. It these embodiments, the grafting pellets have a calcium carbonate content of more than 90 wt.%. In particular, the grafting core has a calcium carbonate content of more than 95 wt.%. In particular applications, the calcium carbonate content can even be more than 97 wt.%. In some applications, like animal feed and human food additives, for instance, the calcium carbonate content of the grafting core can even be more than 99 wt.%.

The term "substantially" herein, such as in in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

The invention further applies to an apparatus or device comprising one or more of the characterising features described in the description. The invention further pertains to a method or process comprising one or more of the characterising features described in the description.

The various aspects discussed in this patent can be combined in order to provide additional advantages. Furthermore, some of the features can form the basis for one or more divisional applications.

### Brief description of the drawings

In the attached figures, some results are illustrated, showing:

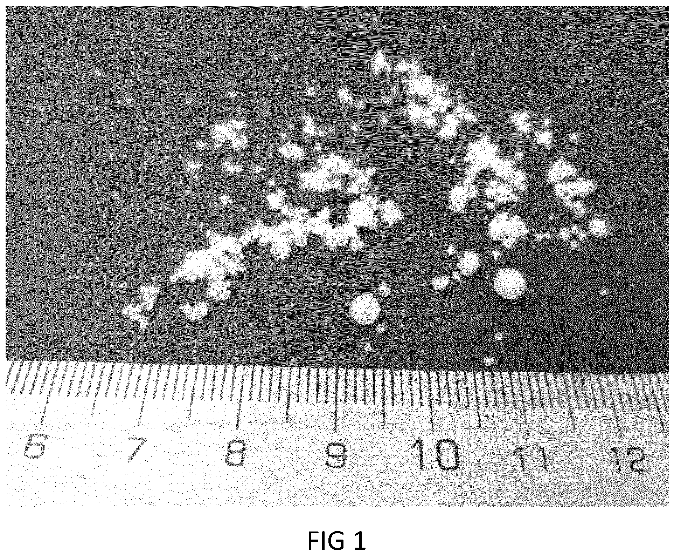

Figure 1: an impression of the pellets before processing.

Embodiments of the invention will now be described, by way of example only, with reference to the accompanying example.

### Description of preferred embodiments

The already described pellets have a size of between 0.5-4 mm. The pellets are

### Feed material: calcite beads or pellets, preprocessing

The specific calcium carbonate beads are produced from a pellet reactor process directed to softening of water, especially drinking water (ACTINA^{™}, "Reducing water hardness with pellet softening". (Veolia Water Solutions & Technologies, Saint-Maurice Cedex, France). The beads are produced in a reactor in which a bed of fine calcite or sand is maintained in fluidization. Calcite or sand particles are used as a crystallization seed for the calcium carbonate that is present in the water. The calcium carbonate precipitates on the surface of the calcite or sand particles under basic pH conditions. In the current application, the produced beads or pellets are first drained end dried.

Following drainage, the water content of the calcium carbonate beads is lower than 5%. These beads are presently used for low value purposes as road embankment material, pipeline trench sublayers and in cement as sand replacer. Usually, draining is done for at least 12 hours. In particular embodiments, draining is done for at least 24 hours. In sone instances, draining is done for at least 48 hours. Usually, the pellets rest in a bunker, warehouse or similar place that is sheltered from the outdoors elements and that has a drainage system onto which the pellets rest.

The current calcium carbonate beads or pellets are spherical, in fact almost perfectly round, and can be composed of about 95-99 % of weight of calcium carbonate. The diameter of the beads is between 0.1 and 5 mm, normally between 0.8 and 2.4 mm, or between 0.5 and 2 mm. Most preferably, the calcium carbonate beads have an average diameter of about 1 mm. A preferred method for determining the average particle size of the beads is sieve analysis or gradation test, which is commonly used to assess the particle size distribution of a granular material (see Figure 1). A sieve is also preferably used to select calcium carbonate beads have a diameter larger than 3 mm, and/or beads that have an average diameter of about 1 mm. The hardness of calcium carbonate beads is between 10-100, as determined with a sclerometer, for example a Turner-sclerometer. The hardness of calcium carbonate beads is higher than of calcite, which is about 9. The density of calcium carbonate beads is about 1800 kg/m3 , which is much higher than the density of, for example, crushed calcium carbonate stone or marble which both are about 1400 kg/m3. Calcium carbonate beads, as herein described, are produced during the water softening process. The beads consist of solid CaCO₃ that is layered around a very small sand or preferably a calcite nucleus with high density of at least 2,8 (Mohs hardness).

### Processing Method of the pellets

### Air classification grinding of calcite pellets with low iron release

Principle of operation: The calcite beads described above are dosed to the grinding chamber equipped with a fixed grinding track and a rotating grinding disc with grinding elements. The material is comminuted by collision with the grinding elements and the grinding track. The grinded material is then transported by an air flow which rises through the gap between grinding track and grinding disc to the classifying wheel in the top of the mill. The fine particles pass the classifying wheel and exit the mill entrained in the air. The coarse particles are rejected and fall back onto the rotating disc where they are comminuted further until they reach the required fineness. The fineness is set by adjusting the speed of the classifying wheel.

From several small scale experiments in product development and it was selected for optimal mill speed 5500 rpm with a classifier speed of 900 rpm for the optimal product for below purposes. In particular, a Hosokawa Alpine Ag Zirkoplex-classifier mill ZPS with integrated ALPINE Turboplex Ultrafine Classifier ATP was used (or similar grinding mills with an air classification system).

Some testing was done using a UPZ 315 grinder, these are not included. This device was able to result in a fineness of the end material with a particle size distribution d90 measured with laser diffraction of below 120, end even around 100 micron. The ZPS 200 grinder, however, proved more suitable as is allowed a particle size distribution d90 measured with laser diffraction of below 100, end even below 60 micron (see table..). The current results have also been obtained using the ZPS630 mill on production scale. It can be done with a capacity of 3-5 mton/h. The particle size d90 measured using laser diffraction can be below 60 micron. In most examples, mill speed was set to 1600-1800 rpm and classifier speed to 100-600 rpm. For low iron contents of the product, wear protection by ceramic and/ or hardox steel grinding elements are used.

Particle size distribution was measured using laser diffraction and using sieve analysis, in particular air jet sieve analysis.

### Starting material

The pellets have first been dried in a bunker with drainage. The resulting water contents is presented below.

| Drying time | dry matter % |
|---|---|
| 12 hours | 93 |
| 24 hours | 98.4 |
| 48 hours | 98.5 |

Sieving analysis was done on the starting material, i.e. calcite beads from drinking water production. Figure 1 shows a sample of the starting material. Sieved using Alpine air jet sieve e200 LS. Resulting particle size distribution is presented in the table below.

| micron | % |
|---|---|
| 250 | 0,98 |
| 500 | 8,84 |
| 710 | 18,7 |
| 1000 | 41,1 |
| 1600 | 82,16 |
| 2000 | 91,26 |
| 3150 | 98,07 |
| 4000 | 99,26 |
| 5000 | 100 |

### End product

Below are results for milling and separation of the starting material. The properties of the starting material are as presented above. Different milling machines have been used.

### ZPS 200

| **Test number** | | **1** | **2** | | **3** | |
|---|---|---|---|---|---|---|
| **Amount of product** | **[kg]** | 99 | 148 | | 485 | |
| **Test duration** | **[min]** | 15 | 15 | | 45 | |
| **Throughput ZPS 200** | **[kg/h]** | 400 | 600 | | 650 | |
| **Throughput ZPS 315** | **[kg/h]** | 800 | 1200 | | 1300 | |
| **Spec. grinding energy** | **[kWh/t]** | 32 | 22 | | 20 | |
| **Bulk density** | **[g/L]** | 890 | 970 | | 990 | |
| **Sample after** | **[min]** | 15 | 15 | 15 | 30 | 45 |
| **Moisture** | **[%]** | 1,9 | 2,4 | 2,5 | 2,8 | 3,2 |

Particle size was measured using laser diffraction.

| | | | |
|---|---|---|---|
| R&D experiments on ZPS200 | | | |
| Settings | | | |
| Classifier speed (rpm) | 1500 | 1000 | 900 |
| Mill speed (rpm) | 5500 | 5500 | 5500 |
| Experiment | 1 | 2 | 3 |
| D10 (µm) | 1,7 | 2,2 | 2,3 |
| D50 (µm) | 12,7 | 18,5 | 20,9 |
| D90 (µm) | 37,4 | 58,4 | 62,4 |
| D97(µm) | 50,2 | 80,5 | 84,1 |
| D99 (µm) | 60,3 | 96,8 | 100,4 |

### UPZ 315 - equipped with plate beaters and grinding track

| **Test number** | | | **10** | **11** |
|---|---|---|---|---|
| **Mill speed** | | **[rpm]** | 7100 | 7100 |
| **Amount of product** | | **[kg]** | 65,4 | 322 |
| **Test duration** | | **[min]** | 5 | 33 |
| **Throughput** | | **[kg/h]** | 785 | 585 |
| **Spec. grinding** | | **[kWh/t** | 17 | 22 |
| **Sample after** | | **[min]** | 5 | 30 |
| Laser | **d10** | **[µm]** | 5,1 | 4,3 |
| | **d50** | **[µm]** | 37,5 | 31,0 |
| | **d90** | **[µm]** | 121,2 | 101,4 |
| | **d97** | **[µm]** | 170,9 | 139,6 |
| | **d99** | **[µm]** | 207,3 | 164,8 |
| Sieve | **50 µm** | **[%]** | 49,9 | 55,2 |
| | **100 µm** | **[%]** | 74,2 | 79,2 |
| | **150 µm** | **[%]** | 84,5 | 88,1 |

In figure 2, a sample distribution and cumulative distribution are presented, produced using ZPS 200 apparatus with settings as indicated.

Testing revealed the following properties.

| **Physical characteristics:** | | | |
|---|---|---|---|
| Appearance | White powder | PASS | |
| Particle size | 90% < 60 µm | PASS | |
| Moisture content | < 2 % | 1% | ANAL-1003-Q |
| | | | |

| **Properties:** | | | |
|---|---|---|---|
| Calcium (Ca) | | 38.6% | ANAL-10256-Q |
| Magnesium (Mg) | | 0.2% | ANAL-10256-Q |
| Sodium (Na) | | 0.02 % | ANAL-10256-Q |
| Phosphorus (P) | | < 0.01 % | ANAL-10256-Q |
| Aluminium (Al) | | < 50 ppm | ANAL-10256-Q |
| Iron (Fe) | < 10 ppm | 8 ppm | ICP |
| | | | |

| **Heavy metals:** | | | |
|---|---|---|---|
| Arsenic (As) | | < 1 ppm | ANAL-10222-Q |
| Cadmium (Cd) | | < 0.1 ppm | ANAL-10222-Q |
| Mercury (Hg) | | < 0.1 ppm | ANAL-10222-Q |
| Lead (Pb) | | < 2 ppm | ANAL-10222-Q |
| | | | |

Conclusion: in experiment 1 the material is relatively fine, the product from experiment 2 and 3 has the optimal particle size (D90 < 60µm and D99 < 100µm) for premix application.

### After optimization we found that in experiment 2 and 3 the product

The settings of ZPS200 were translated to ZPS630 (classifier speed 500 rpm and mill speed 1700 rpm) for identical particle size distribution on production scale.

It will also be clear that the above description and drawings are included to illustrate some embodiments of the invention, and not to limit the scope of protection. Starting from this disclosure, many more embodiments will be evident to a skilled person. These embodiments are within the scope of protection and the essence of this invention and are obvious combinations of prior art techniques and the disclosure of this patent.

## Claims

1. A method for producing a mineral feed additive comprising > 60 wt.% calcium carbonate, in particular comprising calcite, in particular an animal mineral feed additive, more in particular for calves, comprising:
- providing pellets resulting from drinking water softening, the pellets having a grafting core having at least 35 wt.% calcium, in particular at least 90 wt.% calcium carbonate, the pellets having a pellet size of 0.1 - 5 mm measured using sieve analysis, and an iron content below 100 ppm, in particular below 50 ppm, more in particular 5 ppm;
- drying the pellets to a moisture content of below 10 wt.%, in particular below 2 wt.%;
- grinding the pellets in a grinding mill using a grinding disc therewith obtaining grinded pellets, and
- separating from the grinded pellets through a classifying wheel using an air flow, resulting in a particle size distribution with d99 of less than 100 micron measured using a sieve measurement and d99 of less than 100 measured using laser diffraction, a calcium content of between 35% - 40% by weight, and an iron content of less than 50 ppm, in particular less than 10 ppm.

2. The method of claim 1, wherein the grinding mill rotational velocity on production scale is 1500-2000 rpm, preferably 1600-1800 rpm.

3. The method of claim 1 or 2, wherein the classified wheel rotational velocity is 200-800 rpm, preferably 400-600 rpm.

4. The method of any one of the preceding claims, wherein said core is derived from pellets resulting from drinking water softening and comprising a calcium carbonate grafting core.

5. The method of any one of the preceding claims, wherein the feed additive comprises more than 90% by weight calcium carbonate, in particular more than 97% by weight.

6. The method of any one of the preceding claims, wherein the pellets comprise more than 95% by weight calcium carbonate, in particular more than 97% by weight, more in particular more than 99% by weight.

7. The method of any one of the preceding claims, wherein the pellets are sieved before grinding to a sieve diameter smaller than 3 mm.

8. The method of any one of the preceding claims, wherein a disc grinder is used, in particular having ceramic and/or hardox steel wear protection.

9. A mineral feed additive produced using the method of any one of the preceding method claims, comprising as ingredients per 100 gram more than 97% by weight calcium carbonate, an iron content below 10 ppm, and a particle size distribution D99 below 100 micron, in particular D90 below 60 micron.

10. An animal feed composition, in particular for calves, comprising the mineral feed additive of claim 9 as a powder dispersed in water as milk replacement.

11. Use of the mineral feed additive produced using the method of any one of the preceding method claims in animal feed, in particular in calve feed, in particular in a dosage of 1-10 gr/kg in the feed.

12. A calcium carbonate mineral feed additive, in particular produced using the method of any one of the preceding method claims, wherein said calcium carbonate mineral feed product is a powder comprising:
- more than 95 wt.% calcium carbonate, in particular more than 97 wt.% calcium carbonate, more in particular more than 99 wt.% calcium carbonate;
- a particle size distribution with a D99 below 100 micron, in particular D90 below 60 micron when measured using laser diffraction;
- an iron content of less than 50 ppm in particular less than10 ppm;
- a heavy metal content of As < 1 ppm, Cd < 0.1 ppm, Hg < 0.1 ppm and Pb < 2 ppm, and
- an Al content of < 50 ppm.

13. A calcium-rich mineral food additive, produced using the method of any one of the preceding method claims.

14. A calcium-rich mineral excipient, produced using the method of any one of the preceding method claims.
